# EUROPEAN PATENT SPECIFICATION

(11) **EP 3 647 680 B1**
(45) Date of publication and mention of the grant of the patent: **19.04.2023**
(21) Application number: 18840409.9
(22) Date of filing: 18.07.2018
(51) Int. Cl.: F25B 13/00, F24F 13/24, F24F 11/84

(54) **METHOD AND DEVICE FOR CONTROLLING A PLURALITY OF EXPANSION VALVES**
VERFAHREN UND VORRICHTUNG ZUR STEUERUNG MEHRERER EXPANSIONVENTILE
PROCÉDÉ ET DISPOSITIF DE COMMANDE POUR UNE PLURALITÉ DE DÉTENDEURS

(30) Priority: 02.08.2017 CN 201710650431
(43) Date of publication of application: 06.05.2020
(73) Proprietor: Qingdao Haier Air-Conditioning Electronic Co., Ltd, Qingdao, Shandong 266101 (CN)
(72) Inventor: WANG, Jun, Qingdao Shandong 266101 (CN); CHENG, Shaojiang, Qingdao Shandong 266101 (CN); ZHUO, Baitian, Qingdao Shandong 266101 (CN); ZHANG, Ruigang, Qingdao Shandong 266101 (CN); SHAO, Wenjun, Qingdao Shandong 266101 (CN); ZHANG, Wanying, Qingdao Shandong 266101 (CN); SHI, Bin, Qingdao Shandong 266101 (CN)
(74) Representative: dompatent von Kreisler Selting Werner - Partnerschaft von Patent- und Rechtsanwälten mbB
(86) International application number: PCT/CN2018/096155
(87) International publication number: WO 2019/024683

(56) References cited:
- EP-A1- 1 998 123
- EP-A2- 1 555 492
- CN-A- 104 697 120
- CN-A- 105 588 261
- CN-A- 106 907 834
- CN-A- 107 560 214
- JP-A- H04 198 672
- JP-A- H11 325 655

## Description

### TECHNICAL FIELD

The present invention relates to the field of terminal technologies, and more particularly, to a method and a device for controlling an expansion valve.

### BACKGROUND

In a multi-split system, an indoor unit is a unit that a user can directly experience, and cooling and heating effects and noise level thereof directly affect user experience. When the indoor unit operates in a heating mode, an indoor unit heat exchanger serves as a condenser, and an outdoor unit heat exchanger serves as an evaporator, a high-temperature and high-pressure gaseous refrigerant output by a compressor is condensed into a high-pressure normal-temperature liquid refrigerant in the indoor unit heat exchanger, then enters an outdoor unit through an electronic expansion valve, evaporates into a low-temperature gaseous refrigerant at the outdoor unit heat exchanger after throttling and depressurizing, and is compressed into a high-temperature and high-pressure gaseous refrigerant through the compressor to complete a cycle of a refrigeration system.

When the indoor unit operates in the heating mode, since the influence of environment temperatures and various other conditions, the high-temperature gaseous refrigerant may not be sufficiently condensed at the indoor unit heat exchanger, and flows through the electronic expansion valve of the indoor unit in a gas-liquid two-phase state at an outlet of the indoor unit heat exchanger. Therefore, if the indoor unit operates in the heating mode, since the refrigerant passing through the electronic expansion valve of the indoor unit may be in the gas-liquid two-phase state or even a liquid state, when the indoor unit is shut down, a large noise may be generated while the refrigerant flows through the electronic expansion valve of the indoor unit, which will seriously affect the user experience.

JP04198672A discloses an electric expansion valve control device for a multi-chamber air conditioner. A plurality of indoor units are connected to one outdoor unit, each indoor unit is provided with an indoor heat exchanger temperature detection thermistor, and the outdoor unit is provided with a number of electric expansion valves corresponding to each indoor unit. Compare the detection value of the indoor heat exchanger temperature detection thermistor of the indoor unit that has been stopped during the heating operation with the detection value of the indoor heat exchanger temperature detection thermistor of the indoor unit that is in operation. An electric expansion valve control device for a multi-chamber air exchanger configured to control the opening degree of the electric expansion valve corresponding to an indoor unit that has stopped operating.

### SUMMARY

In view of this, embodiments of the present disclosure provide a method and a device for controlling an expansion valve, which can reduce refrigerant noise to a certain extent.

In a first aspect, the present invention provides a methof for controlling a plurality of expansion valves as defined in claim 1.

As described above and as a possible implementation, there is further provided an implementation, after the turning off expansion valves corresponding to all the indoor units in the non-working state, the method further includes:
adjusting a working frequency of a compressor of an outdoor unit according to the number of indoor units in the non-working state.

As described above and as a possible implementation, there is further provided an implementation, wherein the adjusting the working frequency of the compressor of the outdoor unit according to the number of indoor units in the non-working state includes:
obtaining the number of indoor units in the non-working state; and
adjusting the working frequency of the compressor of the outdoor unit according to a formula X=X1-N*A,
where X is a target working frequency, X1 is a normal working frequency of the outdoor unit, N is the number of indoor units in the non-working state, and A is an adjustment coefficient.

As described above and as a possible implementation, there is further provided an implementation, wherein the turning on expansion valves corresponding to the second specified number of indoor units in the non-working state in turn according to the predetermined cycle includes:
turning on the expansion valves corresponding to the second specified number of indoor units in the non-working state in turn according to the predetermined cycle to a specified threshold.

As described above and as a possible implementation, there is further provided an implementation, before the turning off expansion valves corresponding to all the indoor units in the non-working state, the method further includes:
determining whether the number of indoor units currently in a working state exceeds a third specified number; and
when it is determined that the number of indoor units currently in the working state does not exceed the third specified number, turning off the expansion valves corresponding to all the indoor units in the non-working state.

In a second aspect, the present invention provides a system as defined in claim 6.

As described above and as a possible implementation, there is further provided an implementation, the device further includes:
an adjusting unit configured to adjust a working frequency of a compressor of an outdoor unit according to the number of indoor units in the non-working state.

As described above and as a possible implementation, there is further provided an implementation, the adjusting unit is specifically configured to obtain the number of indoor units in the non-working state and adjust the working frequency of the compressor of the outdoor unit according to a formula X=X1-N*A, where X is a target working frequency, X1 is a normal working frequency of the outdoor unit, N is the number of indoor units in the non-working state, and A is an adjustment coefficient.

As described above and as a possible implementation, there is further provided an implementation, wherein the turning on unit is specifically configured to turn on the expansion valves corresponding to the second specified number of indoor units in the non-working state in turn according to the predetermined cycle to a specified threshold.

As described above and as a possible implementation, there is further provided an implementation, the device further includes:
a determining unit configured to determine whether the number of indoor units currently in a working state exceeds a third specified number; and
the turning off unit is configured to, when it is determined that the number of indoor units currently in the working state does not exceed the third specified number, turn off the expansion valves corresponding to all the indoor units in the non-working state.

In a third aspect, the present invention provides a computer program as defined by claim 11.

In a fourth aspect, the present invention provides a computer-readable information medium according to claim 12.

According to the method for controlling the expansion valve provided by the embodiment of the present disclosure, by turning on the expansion valves of part of all the indoor units in the non-working state in turn, and simultaneously turning off the expansion valves of remaining indoor units, it is ensured that only a small amount of noise can be generated in the indoor units in the non-working state. Compared to solutions in the prior art that the expansion valve of all the indoor units in the non-working state will be turned on, the method used in the embodiment of the present disclosure only allows part of the indoor units to generate the noise, and thus the interference caused by the noise can be effectively reduced.

### BRIEF DESCRIPTION OF THE DRAWINGS

To describe the technical solutions in embodiments of the present invention or in the prior art more clearly, the following briefly introduces the accompanying drawings needed for describing the embodiments or the prior art.
Fig. 1 is a flowchart illustrating a method for controlling an expansion valve according to an embodiment of the present disclosure;
Fig. 2 is a flowchart illustrating a method for controlling an expansion valve according to another embodiment of the present disclosure;
Fig. 3 is a flowchart illustrating a method for controlling an expansion valve according to another embodiment of the present disclosure;
Fig. 4 is a flowchart illustrating a method for controlling an expansion valve according to another embodiment of the present disclosure;
Fig. 5 is a block diagram illustrating a device for controlling an expansion valve according to an embodiment of the present disclosure;
Fig. 6 is a block diagram illustrating a device for controlling an expansion valve according to another embodiment of the present disclosure; and
Fig. 7 is block diagram illustrating a device for controlling an expansion valve according to another embodiment of the present disclosure.

### DETAILED DESCRIPTION

In order to better understand technical solutions of the present invention, the embodiments of the present invention will be described in detail below with reference to the accompanying drawings.

It should be known that the described embodiments are merely part of embodiments of the present disclosure rather than all embodiments.

Terms used in embodiments of the present disclosure are only intended to describe specific embodiments, not to limit the present disclosure. Singular forms "a", "said" and "the" used in embodiments and claims of the present disclosure are also intended to include plural forms, unless other senses are clearly defined in the context.

It should be appreciated that the term "and/or" used in the text is only an association relationship depicting associated objects and represents that three relations might exist, for example, A and/or B may represents three cases, namely, A exists individually, both A and B coexist, and B exists individually. In addition, the symbol "/" in the text generally indicates associated objects before and after the symbol are in an "or" relationship.

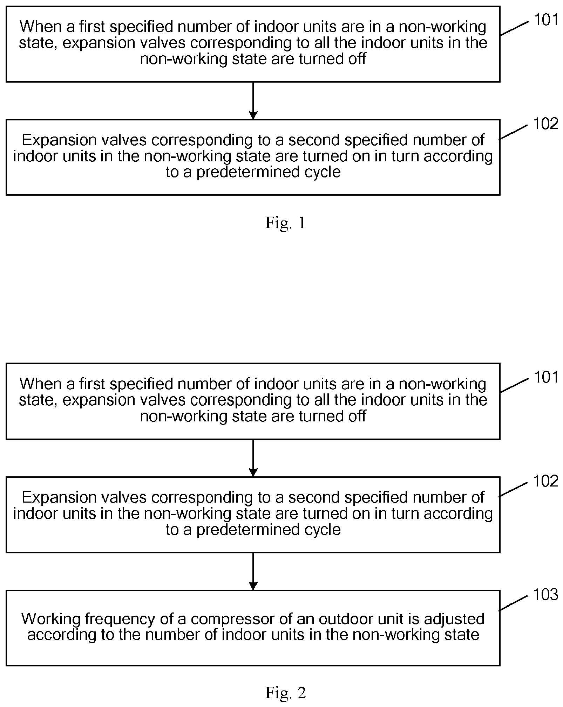

The embodiment of the present invention provides a method for controlling an expansion valve, which aims to solve a mute problem when indoor units in a multi-split system are in a non-working state. The method flow shown in Fig. 1 includes the following steps.

101, when a first specified number of indoor units are in a non-working state, expansion valves corresponding to all the indoor units in the non-working state are turned off.

In the embodiment of the present invention, the non-working state may include a shutdown state or a standby state.

The function of turning off the expansion valves is to stop the flow of refrigerant between the indoor unit and the outdoor unit. After the refrigerant stops flowing, the noise generated by the refrigerant hitting the expansion valve will no longer be generated.

The first specified number is used to indicate the number of the indoor units in the non-working state in the multi-split system, which is generally determined by actual conditions.

102, expansion valves corresponding to a second specified number of indoor units in the non-working state are turned on in turn according to a predetermined cycle.

There is a certain size relationship between the second specified number and the first specified number. In the embodiment of the present invention, it is required that the second specified number is less than the first specified number, so as to ensure that a normal operation of the indoor units in the working state will not be affected. Since the expansion valves are turned on in turn, the second specified number should not be too much, because the excessive start will cause the refrigerant noise again.

The second specified number can generally be set to one or not more than a certain percentage that does not exceed the total number of the indoor units.

It should be noted that although the noise disappears after the expansion valves are turned off, the refrigerant conduction between some indoor units and the outdoor unit is stopped due to the closure of the expansion valves, which will cause the refrigerant to fail to flow through the indoor units in the working state, and thus the internal pressure of the pipeline where the outdoor unit interacts with the indoor units in the normal working state is increased to a certain extent, and the safety may be reduced. Therefore, the expansion valves corresponding to a certain number of the indoor units in the non-working state need to be turned on in turn according to the predetermined cycle to relieve the pressure in the pipeline.

The predetermined cycle can be set according to actual needs or empirical values, such as 1 minute, 5 minutes, 10 minutes, and the like.

According to the method for controlling the expansion valve provided by the embodiment of the present invention, by turning on the expansion valves of part of all the indoor units in the non-working state in turn, and simultaneously turning off the expansion valves of remaining indoor units, it is ensured that only a small amount of noise can be generated in the indoor units in the non-working state. Compared to solutions in the prior art that the expansion valve of all the indoor units in the non-working state will be turned on, the method used in the embodiment of the present disclosure only allows part of the indoor units to generate the noise, and thus the interference caused by the noise can be effectively reduced.

In order to further reduce the internal pressure of the pipeline where the outdoor unit interacts with the indoor units in the normal working state, after performing the step 102, that is, after the turning off expansion valves corresponding to all the indoor units in the non-working state, the embodiment of the present disclosure further provides the following step 103, as shown in Fig. 2, including:
103, a working frequency of a compressor of an outdoor unit is adjusted according to the number of indoor units in the non-working state.

The adjustment method of the working frequency of the compressor of the outdoor unit is as follows:
the number of indoor units in the non-working state is obtained, and the working frequency of the compressor of the outdoor unit is adjusted according to a formula X=X1-N*A, where X is a target working frequency; X1 is a normal working frequency of the outdoor unit, and is generally configured at 20Hz to 120Hz; N is the number of indoor units in the non-working state, and can be collected uniformly by a controller or a manager in the multi-split system; and A is an adjustment coefficient, and can be correspondingly set according to the refrigerant pressure when different numbers of the indoor units work, and the embodiment of the present disclosure does not limit the specific size, as long as the target working frequency is adjusted to between 20Hz and 100Hz.

Through the adjustment method, the working frequency of the compressor of the outdoor unit can be reduced according to the number of the indoor units in the non-working state, thereby preventing excessive refrigerant from being conducted in the pipeline where the outdoor unit performs refrigerant interaction with the indoor units in the normal working state.

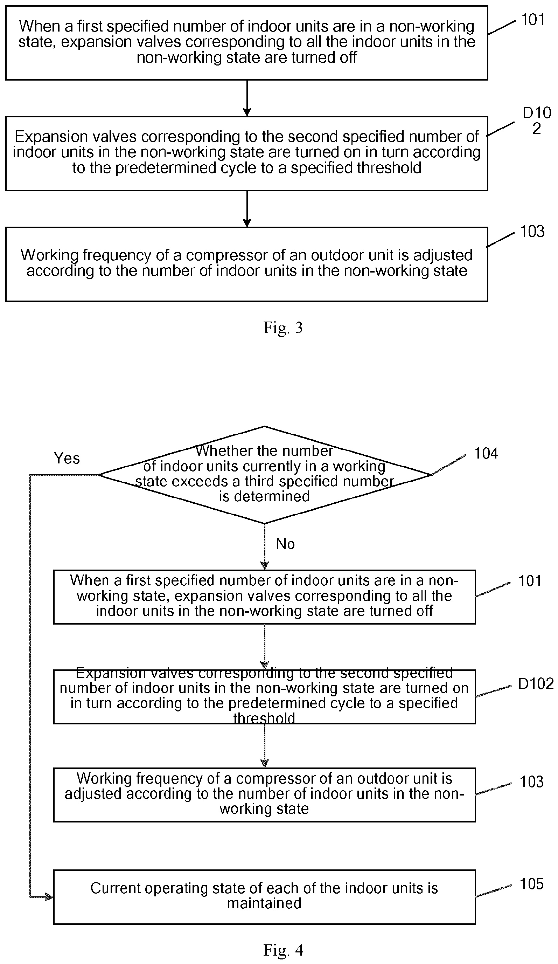

In order to further reduce the noise, the embodiment of the present disclosure further limits an opening degree of the expansion valves during the execution of step 102. As shown in Fig. 3, step 102 can be specifically executed as the following step D102, including:
D102, the expansion valves corresponding to the second specified number of indoor units in the non-working state are turned on in turn according to the predetermined cycle to a specified threshold.

The specified threshold generally needs to be set to be smaller than an opening degree during the normal operation to achieve the effect of reducing refrigerant throughput and noise, for example, 60pls. Of course, the specified threshold can be set to be larger than the opening degree during the normal operation according to actual needs to balance the pipeline pressure as soon as possible.

Before performing the above-mentioned step 101, the embodiment of the present disclosure also needs to determine the number of the indoor units currently running, to determine whether noise control is suitable in a current environment. The specific process is shown in Fig. 4, including:
104, whether the number of indoor units currently in a working state exceeds a third specified number is determined. When it is determined that the number of indoor units currently in the working state does not exceed the third specified number, step 101 is performed. Otherwise, step 105 is performed.

The third specified number generally does not exceed 3% to 5% of the total number of units in the multi-split system. For example, in a 1-to-32 multi-split system, 3% to 5% is 1 to 2 units. After exceeding a certain ratio, a volume of the indoor units during the normal operation will obviously exceed that of the refrigerant noise, and the control of the refrigerant noise becomes less obvious. Of course, the embodiment of the present disclosure does not limit the condition that the third specified number exceeds the number of the indoor units currently in the working state, and the foregoing process is still performed.

105, a current operating state of each of the indoor units is maintained.

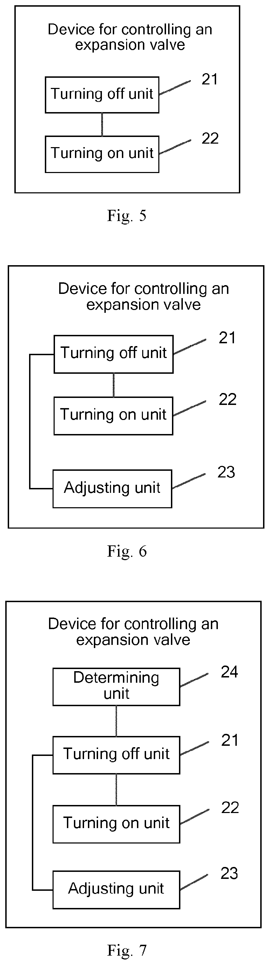

The embodiment of the present invention provides a device for controlling an expansion valve, which can perform the method flows described above. As shown in Fig. 5, the device includes:
a turning off unit 21 configured to, when a first specified number of indoor units are in a non-working state, turn off expansion valves corresponding to all the indoor units in the non-working state; and
a turning on unit 22 configured to turn on expansion valves corresponding to a second specified number of indoor units in the non-working state in turn according to a predetermined cycle.

Optionally, as shown in Fig. 6, the device further includes:
an adjusting unit 23 configured to obtain the number of indoor units in the non-working state; and adjust a working frequency of a compressor of an outdoor unit according to the number of indoor units in the non-working state.

Optionally, the adjusting unit 23 is specifically configured to adjust the working frequency of the compressor of the outdoor unit according to a formula X=X1-N*A, where X is a target working frequency, X1 is a normal working frequency of the outdoor unit, N is the number of indoor units in the non-working state, and A is an adjustment coefficient.

Optionally, the turning on unit 22 is specifically configured to turn on the expansion valves corresponding to the second specified number of indoor units in the non-working state in turn according to the predetermined cycle to a specified threshold.

Optionally, as shown in Fig. 7, the device further includes:
a determining unit 24 configured to determine whether the number of indoor units currently in a working state exceeds a third specified number; and
the turning off unit 21 is configured to, when it is determined that the number of indoor units currently in the working state does not exceed the third specified number, turn off the expansion valves corresponding to all the indoor units in the non-working state.

According to the device for controlling the expansion valve provided by the embodiment of the present invention, by turning on the expansion valves of part of all the indoor units in the non-working state in turn, and simultaneously turning off the expansion valves of remaining indoor units, it is ensured that only a small amount of noise can be generated in the indoor units in the non-working state. Compared to solutions in the prior art that the expansion valve of all the indoor units in the non-working state will be turned on, the method used in the embodiment of the present disclosure only allows part of the indoor units to generate the noise, and thus the interference caused by the noise can be effectively reduced.

It may be understood by persons skilled in the art that for convenience and brevity of description, for a detailed working process of the foregoing system, apparatus, and unit, reference may be made to a corresponding process in the foregoing method embodiments, and details are not described herein again.

In several embodiments provided in the present disclosure, it should be understood that the disclosed apparatus and method can be implemented in other manners. For example, the described apparatus embodiments are merely exemplary. For example, the division of the units is merely a division of logical functions and there can be other division manners during actual implementations. For example, a plurality of units or components can be combined or integrated into another system, or some features can be omitted or not performed. For another, the mutual coupling or direct coupling or a communication connection shown or discussed can be indirect coupling or a communication connection via some interfaces, devices or units, and can be electrical, mechanical or in other forms.

The units described as separate parts may be or may not be physically separated, the parts shown as units may be or may not be physical units, i.e., they can be located in one place, or distributed in a plurality of network units. One can select some or all the units to achieve the purpose of the embodiment according to the actual needs.

Further, in the embodiments of the present disclosure, functional units can be integrated in one processing unit, or they can be separate physical presences; or two or more units can be integrated in one unit. The integrated unit described above can be implemented in the form of hardware, or they can be implemented with hardware plus software functional units.

The aforementioned integrated unit in the form of software function units may be stored in a computer readable storage medium. The aforementioned software function units are stored in a storage medium, including several instructions to instruct a computer device (a personal computer, server, or network equipment, etc.) or processor to perform some steps of the method described in the various embodiments of the present disclosure. The aforementioned storage medium includes various media that may store program codes, such as U disk, removable hard disk, Read-Only Memory (ROM), a Random Access Memory (RAM), magnetic disk, or an optical disk.

## Claims

1. A method for controlling a plurality of expansion valves, **characterized in that**, comprising:
when a first specified number of indoor units are in a non-working state, turning off (101) the plurality of expansion valves corresponding to all the indoor units in the non-working state; and
turning on (102) the plurality of expansion valves corresponding to a second specified number of indoor units in the non-working state in turn according to a predetermined cycle,
wherein the second specified number is smaller than the first specified number.

2. The method according to claim 1, wherein after the turning off (101) the plurality of expansion valves corresponding to all the indoor units in the non-working state, the method further comprises:
adjusting (103) a working frequency of a compressor of an outdoor unit according to the number of indoor units in the non-working state.

3. The method according to claim 2, wherein the adjusting (103) the working frequency of the compressor of the outdoor unit according to the number of indoor units in the non-working state comprises:
obtaining the number of indoor units in the non-working state; and
adjusting the working frequency of the compressor of the outdoor unit according to a formula X=X1-N*A,
where X is a target working frequency, X1 is a normal working frequency of the outdoor unit, N is the number of indoor units in the non-working state, and A is an adjustment coefficient.

4. The method according to claim 3, wherein the turning on (102) the plurality of expansion valves corresponding to the second specified number of indoor units in the non-working state in turn according to the predetermined cycle comprises:
turning on (D102) the plurality of expansion valves corresponding to the second specified number of indoor units in the non-working state in turn according to the predetermined cycle to a specified threshold.

5. The method according to claim 4, wherein before the turning off (101) the plurality of expansion valves corresponding to all the indoor units in the non-working state, the method further comprises:
determining (104) whether the number of indoor units currently in a working state exceeds a third specified number; and
when it is determined that the number of indoor units currently in the working state does not exceed the third specified number, turning off (101) the plurality of expansion valves corresponding to all the indoor units in the non-working state.

6. A system, comprising a plurality of expansion valves and a device for controlling the plurality of expansion valves, **characterized in that**, the device comprising:
a turning off unit (21) configured to, when a first specified number of indoor units are in a non-working state, turn off the plurality of expansion valves corresponding to all the indoor units in the non-working state; and
a turning on unit (22) configured to turn on the plurality of expansion valves corresponding to a second specified number of indoor units in the non-working state in turn according to a predetermined cycle,
wherein the second specified number is smaller than the first specified number.

7. The system according to claim 6, the device further comprising:
an adjusting unit (23) configured to adjust a working frequency of a compressor of an outdoor unit according to the number of indoor units in the non-working state.

8. The system according to claim 7, wherein the adjusting unit (23) is specifically configured to obtain the number of indoor units in the non-working state and adjust the working frequency of the compressor of the outdoor unit according to a formula X=X1-N*A, where X is a target working frequency, X1 is a normal working frequency of the outdoor unit, N is the number of indoor units in the non-working state, and A is an adjustment coefficient.

9. The system according to claim 8, wherein the turning on unit (22) is specifically configured to turn on the plurality of expansion valves corresponding to the second specified number of indoor units in the non-working state in turn according to the predetermined cycle to a specified threshold.

10. The system according to claim 9, the device further comprising:
a determining unit (24) configured to determine whether the number of indoor units currently in a working state exceeds a third specified number; and
the turning off unit (21) is configured to, when it is determined that the number of indoor units currently in the working state does not exceed the third specified number, turn off the plurality of expansion valves corresponding to all the indoor units in the non-working state.

11. A computer program including instructions to cause the system according to any one of claims 6 to 10 to execute the method according to any one of claims 1 to 5 when said program is executed by a computer.

12. A recording medium readable by a computer and having recorded thereon a computer program including instructions to cause the system according to any one of claims 6 to 10 to execute the method according to any one of claims 1 to 5.

## Patentansprüche

1. Verfahren zur Steuerung einer Vielzahl von Expansionsventilen, **dadurch gekennzeichnet, dass** das Verfahren umfasst:
wenn eine erste bestimmte Anzahl von Inneneinheiten in einem nicht arbeitenden Zustand sind, Ausschalten (101) der Vielzahl von Expansionsventilen entsprechend sämtlichen Inneneinheiten in dem nicht arbeitenden Zustand; und
Einschalten (102) der Vielzahl von Expansionsventilen entsprechend einer zweiten bestimmten Anzahl von Inneneinheiten in dem nicht arbeitenden Zustand der Reihe nach gemäß einem vorgegebenen Zyklus,
wobei die zweite bestimmte Anzahl kleiner als die erste bestimmte Anzahl ist.

2. Verfahren nach Anspruch 1, wobei nach dem Ausschalten (101) der Vielzahl von Expansionsventilen entsprechend sämtlichen Inneneinheiten in dem nicht arbeitenden Zustand das Verfahren ferner umfasst:
Einstellen (103) einer Arbeitsfrequenz eines Kompressors einer Außeneinheit gemäß der Anzahl von Inneneinheiten in dem nicht arbeitenden Zustand.

3. Verfahren nach Anspruch 2, wobei das Einstellen (103) der Arbeitsfrequenz des Kompressors der Außeneinheit gemäß der Anzahl von Inneneinheiten in dem nicht arbeitenden Zustand umfasst:
Erhalten der Anzahl von Inneneinheiten in dem nicht arbeitenden Zustand; und
Einstellen der Arbeitsfrequenz des Kompressors der Außeneinheit gemäß einer Formel X=X1-N*A,
wobei X eine Soll-Arbeitsfrequenz ist, X1 eine normale Arbeitsfrequenz der Außeneinheit ist, N die Anzahl der Inneneinheiten in dem nicht arbeitenden Zustand ist, und A ein Einstellungskoeffizient ist.

4. Verfahren nach Anspruch 3, wobei das Einschalten (102) der Vielzahl von Expansionsventilen entsprechend der zweiten bestimmten Anzahl von Inneneinheiten in dem nicht arbeitenden Zustand der Reihe nach gemäß dem vorgegebenen Zyklus umfasst:
Einschalten (D102) der Vielzahl von Expansionsventilen entsprechend der zweiten bestimmten Anzahl von Inneneinheiten in dem nicht arbeitenden Zustand der Reihe nach gemäß dem vorgegebenen Zyklus bis zu einem bestimmten Schwellenwert.

5. Verfahren nach Anspruch 4, wobei vor dem Ausschalten (101) der Vielzahl von Expansionsventilen entsprechend sämtlichen Inneneinheiten in dem nicht arbeitenden Zustand das Verfahren ferner umfasst:
Bestimmen (104), ob die Anzahl der Inneneinheiten, die aktuell in einem arbeitenden Zustand sind, eine dritte bestimmte Anzahl überschreitet; und
wenn bestimmt wird, dass de Anzahl der Inneneinheiten, die derzeit in dem arbeitenden Zustand sind, die dritte bestimmte Anzahl nicht überschreitet, Ausschalten (101) der Vielzahl von Expansionsventilen entsprechend sämtlichen Inneneinheiten in dem nicht arbeitenden Zustand.

6. System, das eine Vielzahl von Expensionsventilen und eine Vorrichtung zur Steuerung der Vielzahl von Expansionsventilen aufweist, **dadurch gekennzeichnet, dass** die Vorrichtung aufweist:
eine Ausschalteinheit (21), die dazu ausgebildet ist, wenn eine erste bestimmte Anzahl von Inneneinheiten in einem nicht arbeitenden Zustand sind, die Vielzahl von Expansionsventilen entsprechend sämtlichen Inneneinheiten in dem nicht arbeitenden Zustand auszuschalten; und
eine Einschalteinheit (22), die dazu ausgebildet ist, die Vielzahl von Expansionsventilen entsprechend einer zweiten bestimmten Anzahl von Inneneinheiten in dem nicht arbeitenden Zustand der Reihe nach gemäß einem vorgegebene Zyklus einzuschalten,
wobei die zweite bestimmte Anzahl kleiner als die erste bestimmte Anzahl ist.

7. System nach Anspruch 6, wobei die Vorrichtung ferner aufweist:
eine Einstelleinheit (23), die dazu ausgebildet ist, eine Arbeitsfrequenz eines Kompressors einer Außeneinheit gemäß der Anzahl von Inneneinheiten in dem nicht arbeitenden Zustand einzustellen.

8. System nach Anspruch 7, wobei die Einstelleinheit (23) besonders dazu ausgebildet ist, die Anzahl von Inneneinheiten in dem nicht arbeitenden Zustand zu erhalten und die Arbeitsfrequenz des Kompressors der Außeneinheit gemäß einer Formel X=X1-N*A einzustellen, wobei X eine Soll-Arbeitsfrequenz ist, X1 eine normale Arbeitsfrequenz der Außeneinheit ist, N die Anzahl der Inneneinheiten in dem nicht arbeitenden Zustand ist, und A ein Einstellungskoeffizient ist.

9. System nach Anspruch 8, wobei die Einschalteinheit (22) besonders dazu ausgebildet ist, die Vielzahl von Expansionsventilen entsprechend der zweiten bestimmten Anzahl von Inneneinheiten in dem nicht arbeitenden Zustand der Reihe nach gemäß dem vorgegebenen Zyklus bis zu einen bestimmten Schwellenwert einzuschalten.

10. System nach Anspruch 9, wobei die Vorrichtung ferner aufweist:
eine Bestimmungseinheit (24), die dazu ausgebildet ist, zu bestimmen, ob die Anzahl von Inneneinheiten, die aktuell in einem arbeitenden Zustand sind, eine dritte bestimmte Anzahl überschreitet; und
die Ausschalteinheit (21) dazu ausgebildet ist, wenn bestimmt wird, dass die Anzahl von Inneneinheiten, die aktuell in einem arbeitenden Zustand sind, die dritte bestimmte Anzahl nicht überschreitet, die Vielzahl von Expansionsventilen entsprechend sämtlichen Inneneinheiten in dem nicht arbeitenden Zustand auszuschalten.

11. Computerprogramm, das Instruktionen enthält, die bewirken, dass das System nach einem der Ansprüche 6 bis 10 das Verfahren nach einem der Ansprüche 1 bis 5 ausführt, wenn das Programm von einem Computer ausgeführt wird.

12. Aufzeichnungsmedium, das von einem Computer lesbar ist und auf dem ein Computerprogramm aufgezeichnet ist, das Instruktionen enthält, die bewirken, dass das System nach einem der Ansprüche 6 bis 10 das Verfahren nach einem der Ansprüche 1 bis 5 ausführt.

## Revendications

1. Procédé de commande d'une pluralité de détendeurs,
**caractérisé en ce que,** comprenant :
lorsqu'un premier nombre spécifié d'unités intérieures est dans l'état de non fonctionnement, la désactivation (101) de la pluralité de détendeurs correspondant à toutes les unités intérieures à l'état de non fonctionnement ; et
l'activation (102) de la pluralité de détendeurs correspondant à un deuxième nombre spécifié d'unités intérieures dans l'état de non-fonctionnement à tour de rôle selon un cycle prédéterminé,
le deuxième nombre spécifié étant plus petit que le premier nombre spécifié.

2. Procédé selon la revendication 1, dans lequel, après la désactivation (101) de la pluralité de détendeurs correspondent à toutes les unités intérieures dans l'état de non-fonctionnement, le procédé comprend en outre :
le réglage (103) d'une fréquence de travail d'un compresseur d'une unité extérieure en fonction du nombre d'unités intérieures dans l'état de non fonctionnement.

3. Procédé selon la revendication 2, dans lequel le réglage (103) de la fréquence de travail du compresseur de l'unité extérieure en fonction du nombre d'unités intérieures dans l'état de non-fonctionnement comprend :
l'obtention du nombre d'unités intérieures à l'état de non fonctionnement ; et
le réglage de la fréquence de travail du compresseur de l'unité extérieure selon une formule X=X1-N*A,
X étant une fréquence de travail cible, X1 étant une fréquence de fonctionnement normale de l'unité extérieure, N étant le nombre d'unités intérieures dans l'état de non fonctionnement, et A étant un coefficient de réglage.

4. Procédé selon la revendication 3, dans lequel l'activation (102) de la pluralité de détendeurs correspondant au deuxième nombre spécifié d'unités intérieures dans l'état de non-fonctionnement à tour de rôle selon le cycle prédéterminé comprend :
l'activation (D102) de la pluralité de détendeurs correspondant au deuxième nombre spécifié d'unités intérieures dans l'état de non-fonctionnement à tour de rôle en fonction du cycle prédéterminé à un seuil spécifié.

5. Procédé selon la revendication 4, dans lequel, avant la désactivation (101) de la pluralité de détendeurs correspondant à toutes les unités intérieures dans l'état de non-fonctionnement, le procédé comprend en outre :
la détermination (104) du fait de savoir si le nombre d'unités intérieures actuellement dans un état de fonctionnement dépasse un troisième nombre spécifié ; et
lorsqu'il est déterminé que le nombre d'unités intérieures actuellement dans l'état de fonctionnement ne dépasse pas le troisième nombre spécifié, la désactivation (101) de la pluralité de détendeurs correspondant à toutes les unités intérieures dans l'état de non-fonctionnement.

6. Système, comprenant une pluralité de détendeurs et un dispositif pour commander la pluralité de détendeurs, **caractérisé en ce que,** le dispositif comprenant :
une unité de désactivation (21) configurée pour, lorsqu'un premier nombre spécifié d'unités intérieures se trouve dans un état de non-fonctionnement, désactiver la pluralité de détendeurs correspondant à toutes les unités intérieures dans l'état de non-fonctionnement ; et
une unité d'activation (22) configurée pour activer la pluralité de détendeurs correspondant à un deuxième nombre spécifié d'unités intérieures, dans l'état de non-fonctionnement, à tour de rôle, selon un cycle prédéterminé,
le deuxième nombre spécifié étant plus petit que le premier nombre spécifié.

7. Système selon la revendication 6, le dispositif comprenant en outre :
une unité de réglage (23) configurée pour régler une fréquence de travail d'un compresseur d'une unité extérieure en fonction du nombre d'unités intérieures dans l'état de non-fonctionnement.

8. Système selon la revendication 7, dans lequel l'unité de réglage (23) est spécifiquement configurée pour obtenir le nombre d'unités intérieures dans l'état de non-fonctionnement et régler la fréquence de travail du compresseur de l'unité extérieure selon une formule X=X1-N*A, X étant une fréquence de travail cible, X1 étant une fréquence de fonctionnement normale de l'unité extérieure, N étant le nombre d'unités intérieures à l'état de non-fonctionnement, et A étant un coefficient de réglage.

9. Système selon la revendication 8, dans lequel l'unité d'activation (22) est spécifiquement configurée pour tourner sur la pluralité de détendeurs correspondant au deuxième nombre spécifié d'unités intérieures, dans l'état de non-fonctionnement, à tour de rôle, selon le cycle prédéterminé à un seuil spécifié.

10. Système selon la revendication 9, le dispositif comprenant en outre :
une unité de détermination (24) configurée pour déterminer le fait de savoir si le nombre d'unités intérieures actuellement dans un état de fonctionnement dépasse un troisième nombre spécifié ; et
l'unité de désactivation (21) est configurée pour, lorsqu'il est déterminé que le nombre d'unités intérieures actuellement dans l'état de fonctionnement ne dépasse pas le troisième nombre spécifié, désactiver la pluralité de détendeurs correspondant à toutes les unités intérieures dans l'état de non-fonctionnement.

11. Programme informatique comportant des instructions pour amener le système selon l'une quelconque des revendications 6 à 10 à exécuter le procédé selon l'une quelconque des revendications 1 à 5, lorsque ledit programme est exécuté par un ordinateur.

12. Support d'enregistrement lisible par un ordinateur et ayant enregistré sur celui-ci un programme informatique comportant des instructions pour amener le système selon l'une quelconque des revendications 6 à 10 à exécuter le procédé selon l'une quelconque des revendications 1 à 5.
